(19) **Europäisches Patentamt**
**European Patent Office**
**Office européen des brevets**

(11) **EP 1 990 677 B1**

(12) **EUROPEAN PATENT SPECIFICATION**

(45) Date of publication and mention
of the grant of the patent:
**29.09.2010 Bulletin 2010/39**

(51) Int Cl.:
*G02F 1/125* *(2006.01)*       *G02F 1/225* *(2006.01)*
*G02F 1/21* *(2006.01)*

(21) Application number: **07009188.9**

(22) Date of filing: **07.05.2007**

(54) **Device and method for modulating light**

Vorrichtung und Verfahren zur Modulation von Licht

Dispositif et procédé de modulation de la lumière

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**12.11.2008 Bulletin 2008/46**

(73) Proprietor: **Forschungsverbund Berlin e.V.
12489 Berlin (DE)**

(72) Inventors:
• **Beck, Markus
91126 Schwabach (DE)**
• **Santos, Paulo Ventura
12305 Berlin (DE)**
• **Morais de Lima, Mauricio (Jr.)
46013 Valencia (ES)**

(74) Representative: **Hertz, Oliver
v. Bezold & Partner
Patentanwälte
Akademiestrasse 7
80799 München (DE)**

(56) References cited:
JP-A- 2006 242 975       JP-A- 2006 276 323
US-A1- 2003 030 882       US-A1- 2005 213 863

• DE LIMA M ET AL: "Compact Mach-Zehnder acousto-optic modulator" APPLIED PHYSICS LETTERS, AIP, AMERICAN INSTITUTE OF PHYSICS, MELVILLE, NY, US, vol. 89, no. 12, 19 September 2006 (2006-09-19), pages 121104-121104, XP012085795 ISSN: 0003-6951
• JAIN F C ET AL INSTITUTE OF ELECTRICAL AND ELECTRONICS ENGINEERS: "RECENT DEVELOPMENTS IN MULTIPLE QUANTUM WELL ACOUSTO-OPTIC AND ELECTRO-OPTIC MODULATOR STRUCTURES" PROCEEDINGS OF THE ULTRASONICS SYMPOSIUM. LAKE BUENA VISTA, DEC. 8 - 11, 1991, NEW YORK, IEEE, US, vol. VOL. 1, 8 December 1991 (1991-12-08), pages 529-536, XP000347200

**Description**

Field of the invention

The invention relates to a device for modulating light, in particular to a waveguide-based acousto-optical switch, frequency generator and/or pulse shaper, and to a method for modulating light, in particular for operating an acousto-optical switch, frequency generator and/or pulse shaper.

Technical Background

The control of light waves through the acousto-optic interaction normally requires a match in phase between the optical and acoustic waves. In conventional Bragg cells, phase matching is achieved by tuning the angle between the acoustic and optical beams in order to obtain constructive interference of the light reflected at the acoustic wave fronts. In most applications, the acoustic wavelengths are much larger than the optical one, so that the phase matching is accomplished with very large angles between the optical and acoustic beams. These large angles (close to 90°) become a serious constraint for acousto-optic-based optical modulation and switching in planar waveguide structures. Various approaches have been proposed to overcome this limitation based on, e.g., acoustically induced coupling between neighbouring waveguides or the use of photonic structures (see e. g. US 5,915,050).

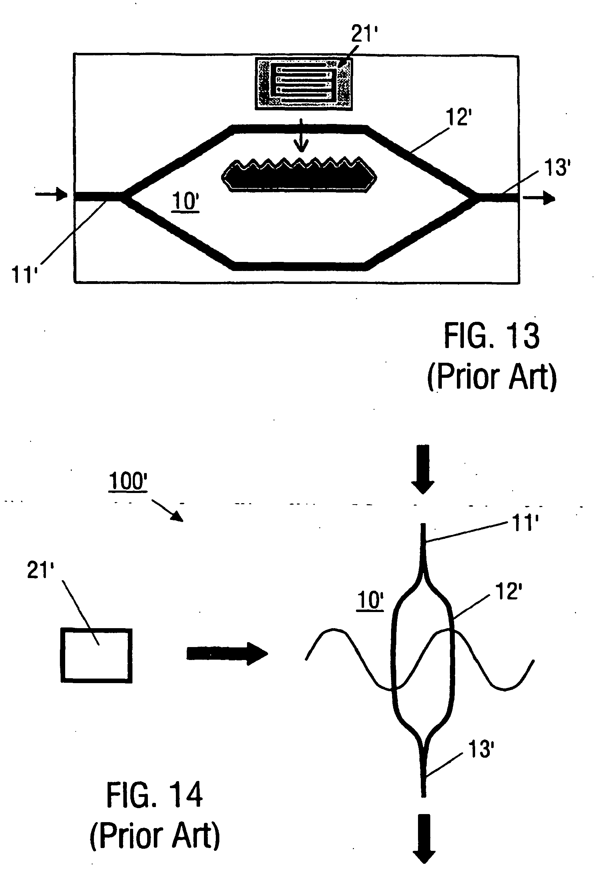

Figure 13 illustrates an alternative approach for acousto-optical waveguide devices based on an acoustically driven Mach-Zehnder interferometer 10' (a-MZI) as described by C. Gorecki et al. (C. Gorecki et al. in "Proc. of SPIE" vol. 3098, 1997, p. 392; C. Gorecki et al. in "Opt. Lett." vol. 22, 1997, p. 1784). MZI 10' includes an input waveguide 11', two MZI arms 12' and an output waveguide 13'. With an acoustic source 21', a surface acoustic wave (SAW) is created. The strain field of the SAW modulates the refractive index of one of the MZI arms 12', which are oriented perpendicular to the SAW propagation direction. Subsequently, the SAW is absorbed for avoiding a distortion of light guided in the other arm of MZI 10'. The periodic modulation of the refractive index results in a periodic change of the transmitted light intensity at the output waveguide 13'. The concept of C. Gorecki et al. has a limited modulation efficiency as only one of the arms 12' is subjected to the acoustic modulation.

In order to increase the modulation efficiency, de Lima et al. proposed the simultaneous modulation of the refractive index of both MZI arms 12' with opposite phases using a single SAW beam as shown in Figure 14 (M. M. de Lima, Jr., M. Beck, R. Hey, and P. V. Santos in "Appl. Phys. Lett." vol. 89, 2006, p. 121104). The opposite phase shifts are implemented by choosing the distance between the two MZI arms 12' to be an odd multiple of the half acoustic wavelength $\lambda_{SAW}$, a procedure that effectively doubles the modulation efficiency for a given acoustic strain level. Since the SAW strain field is proportional to the square root of the acoustic power, the required acoustic power is reduced by a factor of four. By combining the simultaneous modulation of both arms with narrow and intense acoustic beams generated by a source 21' comprising focusing interdigitated acoustic transducers (IDTs), a compact modulator with a modulated arm length of only about 15 $\mu$m has been demonstrated on the (Al,Ga)As material system (M. M. de Lima, Jr., F. Alsina, W. Seidel, and P. V. Santos in "J. Appl. Phys." vol. 94, 2003, p. 7848).

The a-MZI 10' in Figure 14 operates as an efficient light modulator when the static optical phase difference ($\phi^{opt}_s$) between the arms equals $\pi/2$. In this case, the amplitude modulation of the SAW driving signal will be transferred to the MZI light transmission intensity at the output waveguide 13' in the form of a periodic modulation at the SAW frequency $f_{SAw}$ with side-bands corresponding to the actual modulation signal.

Another area of application for the acoustic MZI is the efficient generation of harmonics of the SAW frequency. Best performance for transmission modulation at twice the acoustic frequency ($f_{SAW}$) is achieved using a perfectly symmetric device (i.e., for a static optical phase shift $\phi^{opt}=0$). The light transmission $T_{MZI}(\phi^{max})$ for such a device is given by

$$T_{MZI}(\phi_{max}) = \frac{1}{2}\left\{1 + cos\left[2\phi_{max}(sin\,\omega_{SAW}t)\right]\right\} \tag{1}$$

where $\omega_{SAW} = 2\pi f_{SAW}$ is the SAW angular frequency and $\phi_{max} = 2\pi\Delta n l/\lambda$ is the amplitude of the light phase modulation in each arm. In the previous expression, $\Delta n$ denotes the amplitude of the refractive index modulation induced by the SAW for light with wavelength $\lambda$, and $l$ the modulated length of the arm.

The concept of de Lima et al. is restricted to a periodic light modulation. However, there is an interest in further optical functions like switching or pulse shaping. In contrast to periodic modulation and harmonic generation, switching applications demand the complete suppression of the transmitted (or reflected) light intensity for an arbitrary time interval. Due to the periodic nature of the acoustic modulation, this functionality cannot be realized using the structure of Figure 14. Analysing the time dependency of the transmission $T_{MZI}(\phi_{max})$ shows that, although the average transmitted intensity reduces under acoustic excitation, the modulation will always contain many even harmonics of the fundamental modulation frequency $2f_{SAW}$. The transmitted intensity always contains one or several harmonics of the SAW frequency. In the simple a-MZI device 10' of Figure 14, the acoustic wave reduces the average transmission to a minimum equal to $T \approx -5.25$ dB for $\phi_{max} \approx 1.9$ rad. However, even for this $\phi_{max}$, the transmission still reaches unity twice during one SAW cycle.

Another problem of conventional integrated acousto-optics is related to high frequency applications. During the last two decades different approaches have been proposed for the generation of acoustic waves with frequencies up to the THz range, where the acoustic wavelengths become much shorter than the optical ones. Examples are the piezoelectric generation of bulk acoustic waves, where frequencies up to 96 GHz have been reached, as well wave generation using short laser pulses. In the last case, the generation of acoustic pulses with frequencies in the THz range has been demonstrated, as well as their application for optical control on the ps time scale. While short acoustic wavelengths are expected to increase the frequency response of acousto-optic devices, novel interferometer designs are required for optical control.

Further light modulating techniques using optical waveguides are disclosed in JP 2006 242975 A, JP 2006 276323 A, US 2003/030882 A1, US 2005/213863 A1 and by F.C. Jain et al. in "IEEE. Proceedings of the ultrasonics symposium. Lake Buena Vista" (December 8-11, 1991, New Yord, IEEE, US, vol. 1, 8 December 1991, p. 529-536).

### Objective of the invention

The objective of the invention is to provide improved light modulating devices and methods avoiding the disadvantages and restrictions of the conventional techniques.

This objective is solved by devices and methods comprising the features of independent claims. Advantageous embodiments and applications of the invention are defined in the dependent claims.

### Summary of the invention

According to a first aspect, the present invention provides a light modulating device according to appended claim 1. The device includes a waveguide device being adapted for splitting light into at least three waveguide arms and creating modulated light by superimposing light portions of the waveguide arms, and the device further includes a phase modulator device being adapted for dynamically modulating the optical phase in each of the waveguide arms with a different modulation phase value and controlling at least one of an amplitude characteristic (transmission), a frequency characteristic and a pulse shape of the output light.

According to a second aspect, the present invention provides a light modulating method according to appended claim 15. According to the method, light to be modulated is split with three or more waveguide arms of a waveguide device into light portions each of which being subjected to a different optical phase modulation-. Subsequently, the light portions are superimposed to form output light with an amplitude characteristic, frequency characteristic and/or pulse shape determined by parameters of the optical phase modulation applied.

With the invention, an improved method extended to optical switching or further types of modulating continuous wave (cw) light beams based on an extended a-MZI is provided. The method uses the periodic modulation of waveguide structures e. g. by acoustic waves to realize (a) on/off switches with arbitrary on and off times (as opposed to the modulation at the acoustic frequency demonstrated for the conventional acoustic MZI), (b) harmonic generators for the modulation of light at a multiple of the acoustic frequency, and (c) pulse shapers for the generation of short light pulses.

The inventors have found, that the time dependency of transmission of a connection of three or more waveguide arms has a qualitatively new feature compared with the above conventional structure using two arms only. Depending on the static optical phase (matching) of the waveguide arms, the transmission becomes strongly suppressed (or alternatively enforced, see below), when the phase modulation is turned on. Accordingly, the light modulating device can be used as a switch for arbitrary on/off times. Furthermore, the amplitude and/or frequency of the phase modulation can influence the transmission of the modulated light allowing the above further functions of harmonic generation and pulse shaping.

Phase modulation used according to the invention comprises specifically modulating the optical phase of the light portion in each waveguide arm. The optical phase depends on the light wavelength. Changing the optical phase for a particular wavelength refers to changing the optical length of the waveguide arm, which can be obtained by varying at least one of the refractive index of the waveguide material and the geometric dimensions of the waveguide arm. Phase modulation comprises providing the modulation with a certain modulation phase (or modulation phase values) at the waveguide arm.

The relative distribution of the modulation phases used for varying the optical lengths of the waveguide arms is selected in dependence on the modulation type to be obtained. For most applications, in particular for the switching function, a uniform (equidistant) distribution of the modulation phases in the interval of 0 to $2\pi$ is preferred. For some applications, in particular for the pulse shaping function, a non-uniform (non-equidistant) distribution of the modulation phases in the interval of 0 to $2\pi$ can be more suitable.

A further advantage of the invention is given by the fact, that there are no limitations with regard to the mechanism of phase modulation used for varying the optical lengths of the waveguide arms. Preferably, the phase modulator device can be adapted for providing a modulation using acoustic waves, electric fields, magnetic fields and/or optic light fields. As examples, the refractive index modulation can be induced by magnetostatic waves (see C. S. Tsai et al. in "Appl. Phys. Lett." vol. 47, 1985, p. 685) or possibly by coherent plasmons. Advantageously, available modulators for these types of phase modulation can be easily combined with waveguide structures.

Particularly preferred is an acoustical phase modulation (acousto-optic modulation). Due to the strength of the acousto-optic interaction, the interaction length between optical and acoustic waves in these acousto-optic devices is much shorter than e.g. for electro-optic ones. With the acousto-optic modulation a wide range of material systems is available including, for instance, silicon-on-insulator and waveguides based on amorphous materials, where linear electro-optic effects would be forbidden by symmetry.

The acousto-optical switching of preferably continuous wave (cw) light beams based on the a-MZI concept is proposed by the inventors for the first time. As a further advantage, various types of acoustic waves, in particular surface acoustic waves (SAW) or bulk acoustic waves (BAW) can be used for phase modulation. Finally, the acousto-optic devices are compatible with integrated optics components and can be fabricated using conventional planar technology. The inventive waveguide devices use the periodic refractive index modulation induced by the acoustic wave to switch on and off the light transmission through a waveguide for an arbitrary time interval. In addition, they can be used for the efficient light modulation at high harmonics of the acoustic frequency as well as pulse shapers for e.g. integrated Q-switches.

The invention is not limited to a particular waveguide device design. In particular, straight geometrically parallel waveguide arms or curved waveguide arms with identical shape (as used with arrayed waveguide gratings) can be provided. The shape of the acoustic waves is adapted to the shape of the waveguide arms used. As examples, a parallel beam of an acoustic wave is used for varying the refractive index of a straight waveguide arm, or a divergent or convergent beam of an acoustic wave is used with a curved arm geometry. In the first case, the acoustic wave preferably is directed perpendicularly with reference to a longitudinal extension of the waveguide arm. A convergent focused acoustic wave beam has advantages in terms of compactness of the device.

According to the invention, all waveguide arms are modulated with one common modulator yielding advantages in terms of compact design. With the preferred acoustical phase modulation the phase modulator device comprises one single acoustic source being adapted for generating one single acoustic wave and the optical lengths of the waveguide arms can be simultaneously modulated with the single acoustic wave. The modulation phase values for varying the optical phases of the light portions are provided by the phases of the acoustic wave at the waveguide arms.

The inventive waveguide device includes at least three waveguide arms connected between an input and an output waveguide. While various configurations of arranging the waveguide arms are available, the waveguide arms preferably form at least one Mach-Zehnder-interferometer (MZI).

According to a first variant (so-called "P" configuration), all waveguide arms provide a common parallel connection, i. e. at least three waveguide arms form one single group of parallel connected waveguide arms. In the following, the number of waveguide arms in the "P" configuration is indicated as $N_P$. Any pair of waveguide arms within the single group forms a MZI.

According to a second variant (so-called "S" configuration), the waveguide device comprises at least two groups of waveguide arms connected in parallel, wherein the different groups are serially connected between the input and output waveguides. Each group of waveguide arms includes at least two waveguide arms. Preferably, any pair of waveguide arms within one of the group forms an MZI. In the following, the number of groups of waveguide arms in the "S"-configuration is indicated as $N_S$. Typically, each group has the same number $N_P$ of parallel connected waveguide arms. The whole number N equals $N = N_P \cdot N_S$. In the simplest case, the waveguide device comprises two MZI's in series ($N_P = N_S = 2$). One important advantage of the "S" configuration over the "P" configuration is the lower phase modulation $\phi_{max}$ (smaller phase shifts) required for optical switching, which directly translates into lower acoustic powers. The "S" configuration has further advantages in terms of generating higher harmonics of the modulation frequency. For a given number of arms, the number of harmonic components with significant amplitude is much higher for the "S" configuration compared to the "P" configuration.

Any complex combinations of $N_P$ and $N_S$ in "P" configuration and "S" configuration are possible, including devices with unequal numbers of parallel arms being connected in series.

For providing the equidistant distribution of the modulation phases of the single acoustic wave, the waveguide arms of the "P" configuration or within each of the groups of the "S" configuration are preferably arranged with a mutual centre-to-centre-distance of neighbouring waveguide arms equal to $\lambda_{AW}*n/N$, wherein $\lambda_{AW}$ is the wavelength of the acoustic wave and n, N are even coprime numbers (numbers having no common factor). According to a particularly preferred embodiment, neighbouring waveguide arms have a distance equal to odd multiples of $\lambda_{AW}/2$. Advantageously,

an increased modulation efficiency for a given acoustic strain level can be obtained like with the conventional technique of de Lima et al.. With the "S" configuration, the waveguide arms preferably are arranged such, that the distance of neighbouring waveguide arms equals $\lambda_{AW}*(n+1)/(N_S N_P)$, wherein $\lambda_{AW}$ is the wavelength of the acoustic wave n is an even number.

The previous considerations preferably refer to the case when the acoustic wavelengths are much larger than the width of the waveguides. If, according to a further advantageous embodiment of the invention, the waveguide arms are formed with an inhomogeneous structure having a transversally refractive index profile, advantages in terms of light modulation with increased frequency (up to the range above 1 GHz, e. g. about 40 GHz), where the acoustic wavelengths become much shorter than the optical ones.

With the invention, various functions of the light modulating device can be implemented depending on the static optical phase in (or: matching of) the waveguide arms in a non-modulated state. Firstly, the waveguide arms may be matched so that the light portions in the output waveguide are superimposed constructively. In an off-state, in which the phase modulator device is not operated, the optical lengths of the waveguide arms are identical (or have differences equal even multiples of $2\pi\lambda$, with $\lambda$ being the light wavelength). With a modulation state, in which the phase modulator device is turned on, the optical lengths of the waveguide arms are modulated with the modulation phase values. Accordingly, the transmission becomes strongly suppressed, when the phase modulator device is operated. Secondly, the waveguide arms may have different optical lengths in an off-state, in which the phase modulator device is not operated. The optical lengths are adjusted such, that the light portions superimposed in the output waveguide have different phases. Preferably, the phases are uniformly distributed in the interval 0 to $2\pi$. In a modulation state, in which the phase modulation is turned on, the waveguide arms have optical lengths such, that the light portions in the output waveguide are superimposed constructively.

The inventors have found, that the switching, harmonic generation or pulse shaping function can be provided simply by one single modulation parameter given by e. g. an amplitude of the phase modulation (acoustic intensity-). The phase modulator device can be adapted for controlling at least one of an amplitude characteristic, a frequency characteristic and a pulse shape of the modulated light on the basis of a predetermined fixed modulation parameter. Alternatively, the amplitude of phase modulation and the associated modulation of the optical lengths of the waveguide arms are preferably adjustable with a modulation setting device. According to a further alternative embodiment of the invention, the optical phase modulation for optical control can be achieved by changing the acoustic frequency (or equivalently acoustic wavelength). In this case, the acoustic wavelength of phase modulation and the associated modulation of the optical lengths of the waveguide arms are preferably adjustable with a frequency setting device. As an essential advantage of both variants, an electrical control of the transmitted intensity can be provided.

According to a further preferred feature of the inventive light modulating device, the waveguide device is an integrated solid state device. Using an integrated waveguide device as an optical switch, a frequency generator and/or a pulse shaper represents an independent subject of the invention. Advantageously, solid state devices are compatible with integrated optics based on planar technology and can be applied for different material systems. Preferably, the waveguide arms can be connected with the input waveguide and/or with the output waveguide via an Y- (or T-)branching or a multimode interference coupler (MMI). Y- (or T-)branchings have advantages in terms of providing physical splitting of the light. All light portions input to the arms have the same optical phase. On the other hand, using multimode interference couplers advantages in terms of saving space allowing the fabrication of more compact light modulating devices.

Brief description of the drawings

Figures 1 to 4: schematic illustrations of light modulating devices according to preferred embodiments of the invention;

Figure 5: a photograph illustrating a waveguide device used for modulating light according to a further embodiment of the invention;

Figure 6: a graphical representation of the optical switch function of a light modulating device according to the invention;

Figure 7: a schematic illustration of a light modulating device according to a further embodiment of the invention;

Figure 8: a graphical representation of the frequency generator function of a light modulating device according to the invention;

Figure 9:          a schematic illustration of a light modulating device according to a further preferred embodiment of the invention;

Figure 10:         a graphical representation of the pulse shaping function of a light modulating device according to the invention;

Figure 11:         schematic illustration of a further aspect of light modulation devices according to the invention;

Figure 12:         schematic illustration of a light modulating device not according to the invention; and

Figures 13 and 14:  conventional light modulating devices (prior art).

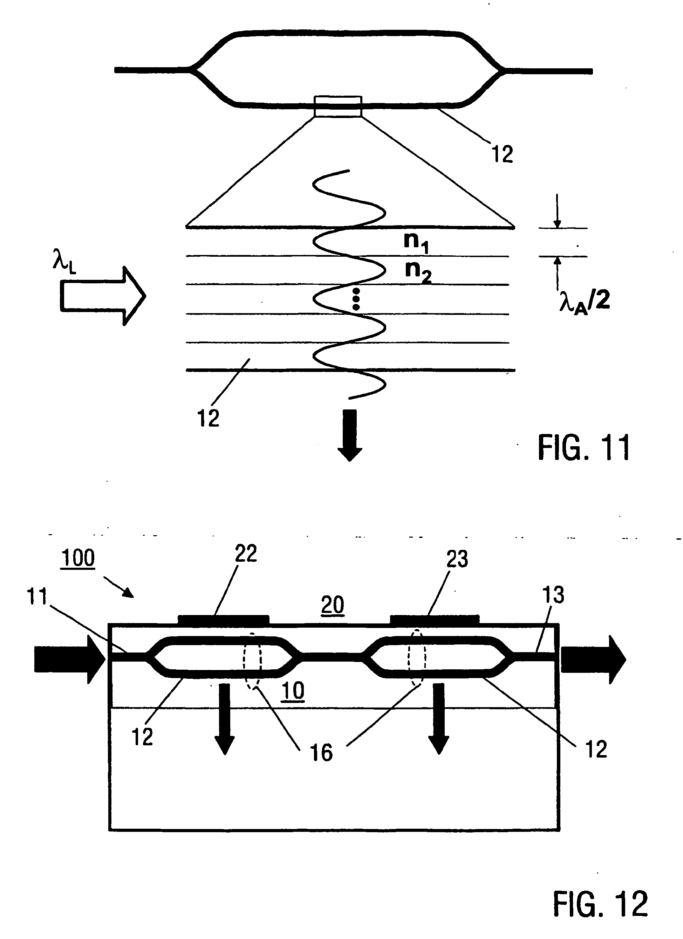

In the following description, in most cases exemplary reference is made to embodiments of the invention using surface acoustic waves (SAW). It is emphasized, that the illustrated structures and optical response of light modulating devices can analogously be obtained with the inventive technique using bulk acoustic waves (BAW, see Figure 12) or using other modulation mechanisms. Furthermore, reference is made to devices with matched waveguide arms adapted for constructive interference of light portions in the output waveguide in non-modulated state. Devices with waveguide arms adapted for constructive interference of the light portions in the modulated state can be implemented in an analogue way.

The light modulating devices are schematically illustrated in a non-scaled fashion. The practical dimensions and in particular mutual distances of waveguide arms are selected on the basis of the considerations outlined below. Details of design, materials and fabrication of integrated waveguide devices are not described here as far as they are known from prior art techniques (see e. g. the above publications of C. Gorecki et al. and M. M. de Lima, Jr. et al.).

Basic embodiments of the light modulating device

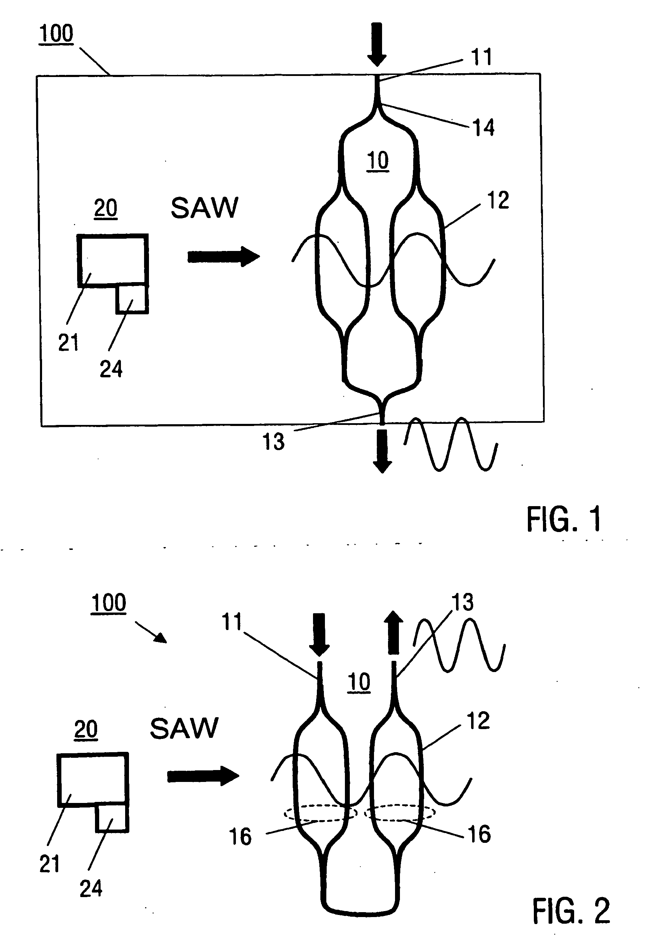

With the "P" configuration (Figure 1), a first embodiment of the inventive light modulating device 100 ("P" device) comprises a waveguide device 10 with an input waveguide 11, waveguide arms 12 and an output waveguide 13. The input waveguide 11 is split into e. g. four waveguide arms 12 at an Y- or T-branching 14. The waveguide arms 12 are connected in parallel between the input and output waveguides 11, 13.

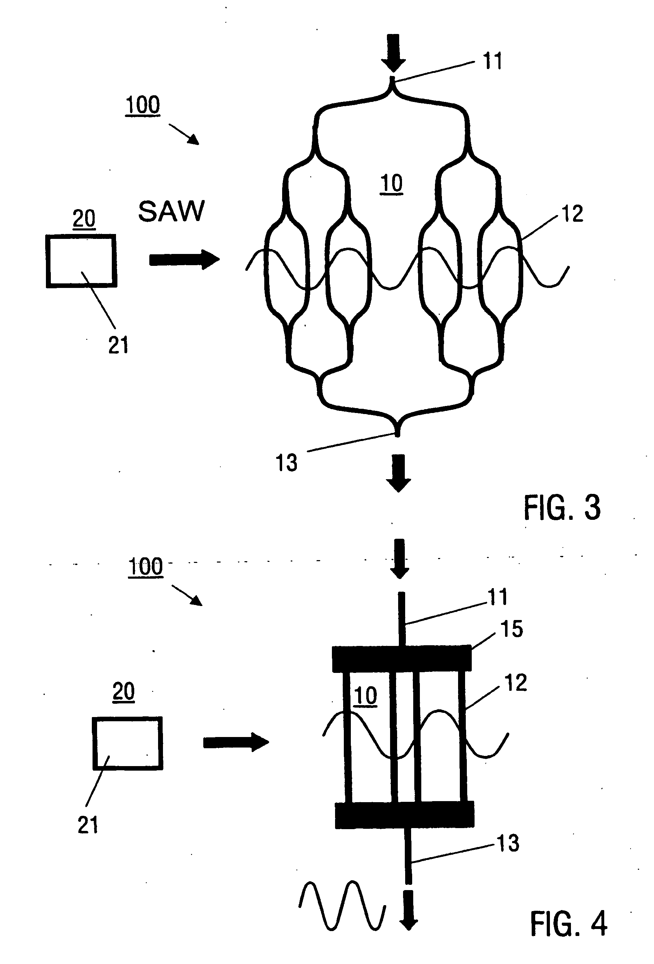

At least three interferometers arms are connected in parallel in the "P" devices, as illustrated for $N_P = 4$ and $N_P = 8$ in Figures 1 and 3, respectively. For switching applications, the arms are preferably spaced in such a way that, with respect to a given arm, the SAW phase differences of the other arms are $2\pi m/N_P$ (m = 1, ... , $N_P$ - 1), i.e. the SAW phases of the Np arms are equally spaced within $2\pi$. The most practical way to realize this is by choosing a separation of $n \cdot \lambda_{SAW}/N_P$ between the centre positions of adjacent arms (n is an integer co-prime to $N_P$). The device in Figure 1 ($N_P$ = 4) consists of two a-MZI's connected in parallel and separated by $5\lambda_{SAW}/4$. The use of the symmetric Y-shaped (or T-shaped) waveguide splitters 16 ensures equal light phase shifts through each of the arms 12. This can be extended to devices with $N_P = 2^m$ arms (m is an integer).

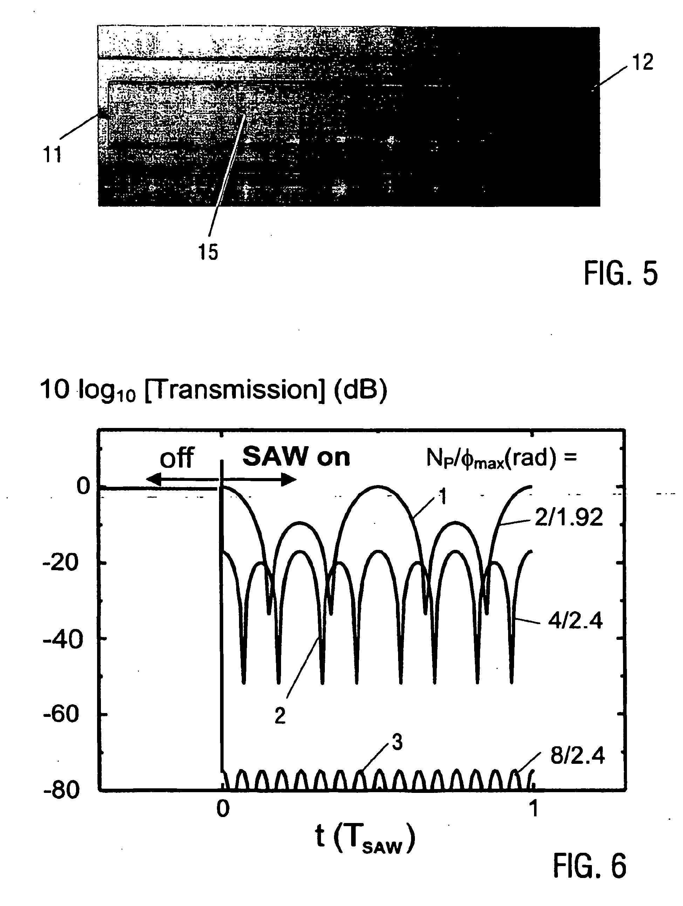

Another embodiment of the "P" configuration is illustrated in Figure 3. Eight waveguide arms 12 are connected in parallel between the input and output waveguides 11, 13 ($N_p$ = 8) using Y-branchings for splitting or connecting pairs of waveguide arms or connected waveguide arms. As an alternative to the use of Y-branchings, multimode interference couplers (MMI's) 15 can be used for splitting or connecting wave guides as shown in the drawing of Figure 4 ($N_p$ = 4) or in the photograph of Figure 5 (Np = 6). The preferred requirement of equal light phase shifts in the absence of a SAW can be satisfied by combining MMI's with waveguides of different widths (e. g. by providing a centre arm which is thicker than the outer ones), leading to different effective refractive indices for the optical modes.

With the "S" configuration ("S" device, Figure 2), a further embodiment of the inventive light modulating device 100 comprises a waveguide device 10 with an input waveguide 11, at least two serially connected groups 16 each with at least two waveguide arms 12 and an output waveguide 13. Each of the groups 16 represents an a-MZI.

In both configurations shown in the Figures, the light modulating device 100 comprises a phase modulating device 20 including an acoustic source 21 and a modulation setting device 24. The modulation setting device 24 is adapted for adjusting the amplitude of light phase modulation $\phi_{max} = 2\pi\Delta nl/\lambda$, e. g. by changing at least one of the factors $\Delta n$, $l$ and $\lambda$. Preferably, the modulation amplitude (in particular SAW amplitude) is varied for adjusting factor $\Delta n$. Both of the waveguide device 10 and the phase modulating device 20 are integrated on a surface of a common substrate as it is known from conventional integrated optics.

According to the invention, complex combinations of $N_P$ and $N_S$ waveguide arms in "P" configuration or "S" configuration are possible, including devices with unequal numbers of parallel arms being connected in series. In practice, the inventive light modulating device 100 is coupled to further optical components as it is known from integrated optics.

As an example, embodiments of the light modulating devices for operation in the 900 to 1000 nm wavelength range are fabricated by growing e. g. (Al,Ga)As waveguides on a GaAs (100) substrate by molecular beam epitaxy. The sample consists e.g. of a 300 nm thick GaAs film forming the core of a surface waveguide deposited on a 1500 nm thick $Al_{0.2}Ga_{0.8}As$ cladding layer. The devices are fabricated in two steps using optical contact lithography. First, 150 nm deep grooves delimiting the ridge waveguides are produced by plasma etching. Subsequently, interdigital transducers (IDT's) for SAW fabrication are fabricated using a lift-off metallization process to structure a 60 nm thick metal layer. The split finger IDT's have an aperture of e. g. 120 mm and are designed for $\lambda_{SAW}$ = 5.6 $\mu$m (corresponding to $f_{SAW} \approx$ 520 MHz). Widths of the waveguides are about 700 nm. For experimental tests, light has been coupled into the input waveguide using a tapered fibre with a cylindrical lens on its tip. As a light source, a superluminescent diode with a 50 nm wide emission peak centred at $\lambda_L$ = 920 nm has been used. The fibre adjusted using a piezoelectrically controlled stage. Transmitted light was collected using a 50x microscope objective focused on the cleaved edge of the output waveguide and detected using an optical spectrometer.

The optical transmission coefficient of the inventive light modulating device can be easily calculated with the following assumptions:

- The arms of all interferometers have the same optical path length in the absence of modulation, e. g. acoustic excitation, i.e. all optical phase differences vanish (or are multiples of $2\pi$). Hence, all optical beams interfere constructively and the devices have unitary transmission in the absence of acoustic excitation.
- In each arm, the light experiences a sinusoidal phase modulation (e. g. induced by SAW) with the same amplitude $\phi_{max}$.
- The arm widths are much smaller than the modulation wavelength $\lambda_{SAW}$, so that the SAW-induced refractive index modulation $\Delta n$ can be considered constant across the arm cross-section. Concepts to overcome this assumption are discussed below (see Figure 11).
- The light propagation time through each arm (given by $n_{eff} l/c_0$, where $c_0$ is the light speed in vacuum, $l$ the arm length, and $n_{eff}$ the effective refractive index of the waveguide) is much shorter than the period of the SAW divided by $N$.

With the "P" configuration, the transmission is represented by adding the transmitted field through the waveguide arms 12 according to

$$T_P^{(N_P)}\left[t, \varphi_s^{SAW}\right] = \left| \frac{1}{N_P} \sum_{m=0}^{N_P-1} e^{i\left[\phi_{max} \sin(\omega_{SAW}t + \frac{2\pi m}{N_P} + \varphi_s^{SAW})\right]} \right|^2$$

(2)

where $\varphi_s^{SAW}$ is the phase of the SAW at the first interferometer arm (corresponding to m = 0) and $\phi_{max} = 2\pi\Delta n l/\lambda$ is the amplitude of the light phase modulation in each arm (see (1)). The modulated length $l$ of the arm is typically in the range of 15 $\mu$m to 150 $\mu$m. Phase $\varphi_s^{SAW}$ depends on the distance between the source 21 and the interferometer arms 12. This factor does not affect the transmission amplitude in the "P" configuration, but will be important for "S" devices, which are discussed in the following.

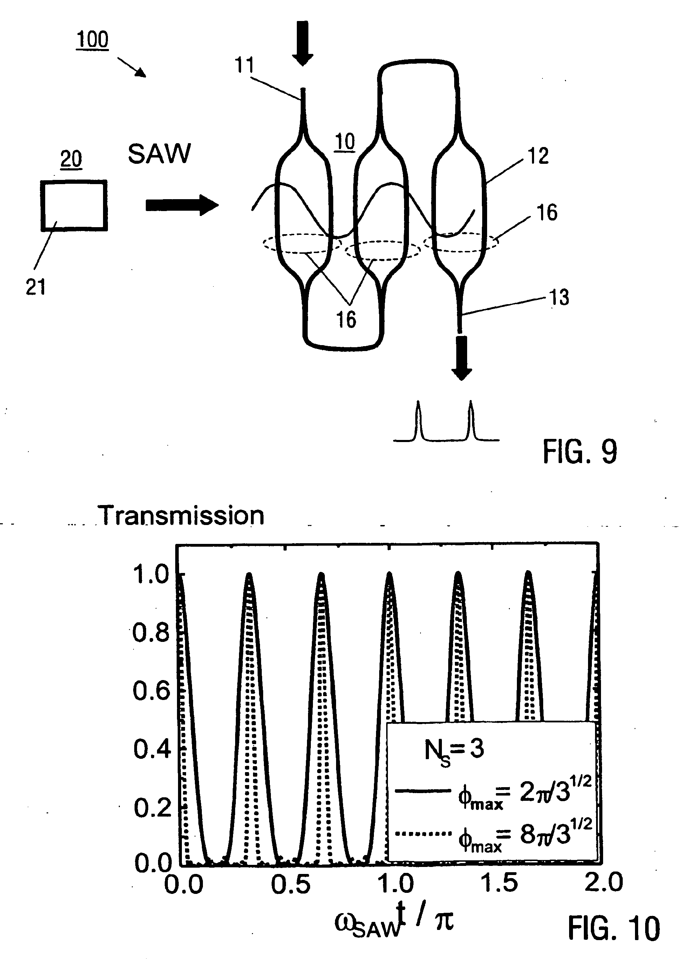

With the "S" configuration, "P" devices are connected in series and arranged to be modulated with different phase values of the acoustic wave. As in the parallel configuration, the lateral separations between the a-MZIs is chosen such that the SAW-induced phase shifts in the individual arms are evenly distributed within the $2\pi$ SAW phase (e.g. by an equidistant phase spacing equal to $\lambda_{SAW}$ (n + 1)/($N_S N_P$), n even number). For simplicity, structures consisting of $N_s$ interferometers connected in series, each with $N_P$ = 2 arms (i.e., corresponding to the a-MZIs in Figure 1) are considered. The corresponding design for $N_S$ = 2 and $N_s$ = 3 are illustrated in Figures 2 and 9, respectively.

The transmission intensity in the "S" configuration is given by

$$T_S^{(N_P, N_S)}[t] = \prod_{m=0}^{N_{S-1}} T_P^{(N_P)}\left[t, \frac{2\pi m}{N_S N_P}\right] \tag{3}$$

According to (3) the transmission of the "S"-device depends on the amplitude of the light phase modulation $\phi_{max} = 2\pi\Delta nl/\lambda$ as well.

It can be seen e. g. from the SAW schematically inserted in Figure 1 that the total transmission becomes invariant with respect to shifts of the SAW phase by $2\pi/N_P$. As a result, when the refractive index of the arms is modulated by a SAW with frequency $f_{SAW}$, the transmitted intensity will contain only harmonics of the fundamental frequency $N_P f_{SAW}$.

The inventors have found that various optical characteristics can be obtained depending on the amplitude and/or frequency of the light phase modulation $\phi_{max} = 2\pi\Delta nl/\lambda$ as outlined in the following.

With a light phase modulation $\phi_{max}$ in a range of 2.3 to 2.5 rad, preferably close to 2.4 rad for P-devices and $\phi_{max}$ in a range of 1.6 to 2 rad, preferably close to 1.8 rad for S-devices, the average transmission becomes strongly suppressed (optical switching function). With increasing $\phi_{max}$ above 2.5, modulated light including an increasing number of higher harmonics of the modulation frequency is transmitted, so that the light modulating device provides a harmonic generator or with further increasing the number of transmitted frequencies even a pulse generator.

Alternatively, optical characteristics can be obtained depending on the frequency (wavelength) of the light phase modulation. Equations (2) and (3) indicate that the transmission can be changed depending on frequency of modulation, i. e. by using appropriate values for $\omega_{SAW}$ and $\varphi_s^{SAW}$. In this case, the modulation setting device 24 is adapted for adjusting the frequency (wavelength) of light phase modulation. While many surface acoustic transducers have a narrow bandwidth (i.e., the acoustic wavelength cannot be changed over large ranges), acoustic sources are available that operate over a wider range, e. g. 10 to 30% of the centre wavelength, or transducers that generate frequency harmonics, e.g., that can be operated at f or 2f, thus producing wavelengths $\lambda_{SAW}$ and $\lambda_{SAW}/2$, respectively.

Inventive modulation is not restricted on the provision of certain values of $\phi_{max}$ or $\omega_{SAW}$. Particular values of modulation amplitude and/or frequency can be selected by the skilled person on the basis of simple experimental tests or simulation calculations, in particular depending on the application of the invention and parameters of a real device. For the switching function, amplitude and/or frequency is adjusted such that a transmission suppression is obtained. For the harmonic generation or pulse shaping function, amplitude and/or frequency is adjusted such that the modulated light has the frequency components to be obtained.

According to further alternatives, non-sinusoidal phase modulation can be provided instead of sinusoidal phase modulation. Non-sinusoidal phase modulation can be provided by using e. g. a switching modulator creating a pulse-shaped modulation instead of a wave-type modulator. Rectangular or other pulse shapes can be realized. As an advantage, the transmission suppression can be improved for the optical switching function.

Optical switching

By an appropriate choice of $\phi_{max}$, the transmission becomes strongly suppressed when the SAW is turned on, thus providing the switching function with arbitrary on/off times. The switching function is illustrated in Figure 6 representing the time dependency (equations (1, 2)) of the transmitted intensity for waveguide devices with different numbers of arms. The unit of the time parameter is the period of the SAW modulation. For t < 0 (SAW turned off), the transmission is not modulated by the SAW. For t > 0 (SAW turned on), the transmission is modulated depending on the number of arms. With the conventional device ($N_P = 2$, $\phi_{max} = 1.92$ rad), curve 1 according to above equation (1) shows that the transmission still reaches unity during one SAW cycle. With the inventive device of Figure 1 ($N_P = 4$, $\phi_{max} = 2.4$ rad), curve 2 according to above equation (2) is obtained. The transmission does not reaches unity during the SAW cycle. Accordingly, the simultaneous reduction of the average value as well as of the amplitude of the transmission oscillations under the periodic SAW modulation is obtained. The damping is further increased with the inventive device of Figure 3 ($N_P = 8$, $\phi_{max} = 2.4$) as shown with curve 3 according to above equation (2). For serial devices, equation (3) yields a similar on/off switching operation as illustrated in Figure 6.

Operation as an ideal "ON/OFF" switch requires that the total transmission drops to zero for a particular SAW amplitude. For the "P" configuration of Figure 1, this conditions is best satisfied near $\phi_{max} = 2.4$ rad for $N_p \geq 4$, where the transmission reduces for all harmonic components. In fact, it can be shown that in the limiting case of $N_P \to \infty$, transmission (2) becomes equal to $(J_0^2(\phi_{max}))$. Here, $J_0$ is the 0th-order Bessel function of the first kind, which has its first zero at $\phi_{max} \approx 2.40483$ rad. The "S" configuration employing stages with Np = 2 can also be used for "ON/OFF" switches by changing the SAW-induced phase from $\phi_{max} = 0$ ("ON"-state) to $\phi_{max} \approx \pi/2$ rad ("OFF"-state).

Calculations have shown that the residual transmission (defined here as the maximum instantaneous transmission during the SAW cycle, which is typically approx. 3 dB above the average (or cw) transmission) is much lower for the "P" than for the "S" configuration for devices with more than 3 arms. In addition, in the "P" configuration the residual transmission reduces much faster with the number of arms. One advantage of the "S" configuration, however, is the smaller phase modulation amplitude $\phi_{max}$ required to reach a given level of transmission suppression. In contrast to the "P" configuration, which require SAW-induced phase shifts $\phi_{max} \approx 2.4$ rad independent of the number of arms, the shifts for the "S" devices are much lower and reduce with increasing number of arms.

For realistic devices, the advantages associated with the higher contrast of the "P" configuration as compared to "S" may be partially offset by the narrower width of the transmission minima as a function of $\phi_{max}$. The latter makes the minimum transmission achieved in "P" devices more sensitive to fabrication errors. The "P" configuration, however, is easier to implement using the narrow focused acoustic beams (see the above publications of M. M. de Lima, Jr. et al.) required for compact devices since a single SAW source 21 can drive several arms 12. The same concept can be applied for the "S" configuration if curved waveguides with small curvature radii (on the order of a few acoustic wavelengths) are employed to connect the individual a-MZIs in series. The small curvature radii can be obtained with material systems with high refractive index contrast (e.g. silicon on insulator (SOI), III/V membranes).

Generation of high harmonics

With increased light phase modulation $\phi_{max}=2\pi\Delta nl/\lambda$, the inventive devices can be used to modulate the transmitted light at harmonics of the SAW frequency as well as for the generation of light pulses. Here, the inventors have used the fact that the coupled devices generate several harmonics of the fundamental SAW frequency, in particular for high modulation amplitudes $\phi_{max}$. For the generation of high harmonics, the modulation amplitudes $\phi_{max}$ is preferably selected in the range above 2.5 rad. The modulation of a cw input light beam at a particular harmonic of the SAW frequency is best realized in the "P" configuration, where the number of high frequency components contributing to the total modulation is small compared to the "S" configuration. This property can be used for the selective modulation of the transmitted light beam at a particular harmonic of the SAW frequency by an appropriate choice of the number of arms and modulation amplitude $\phi_{max}$.

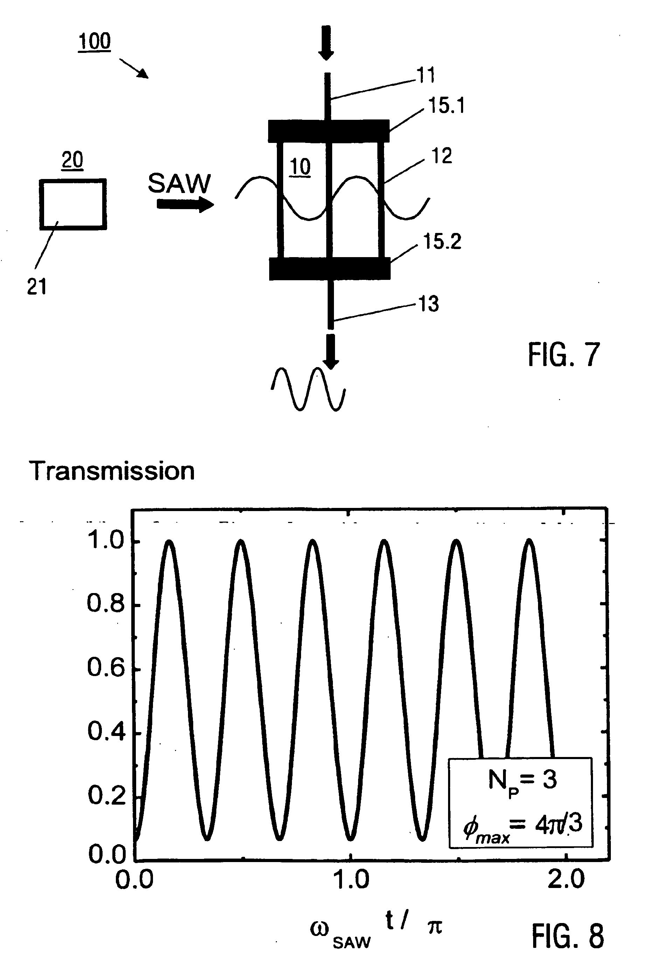

As an example, Figure 7 shows a light modulating device 100 including a waveguide device 10 with an input waveguide 11, a first MMI coupler 15.1, three waveguide arms 12, a second MMI coupler 15.2 and an output waveguide 13. A SAW is generated with the acoustic source 21 of the phase modulator device 20. Each of the waveguide arms 12 is modulated e.g. with a sinusoidal phase shift with amplitude $\phi_{max} = 4\pi/3$ rad. As a result, the transmission is efficiently modulated at the 6th harmonic of the SAW frequency as shown in Figure 8.

Generation of pulses

Short light pulses can be preferably realized by exploring the high harmonics content of the "S" configuration. Figure 9 illustrates a further embodiment of the inventive "S" device 100, which comprises a waveguide device 10 with an input waveguide 11, three groups 16 of two waveguide arms 12 and an output waveguide 13. Each of the serially connected groups 16 represents one a-MZI. Figure 10 shows the transmission of the embodiment of Figure 9 subjected to modulation amplitudes $\phi_{max} = 2\pi/\sqrt{3}$ rad (solid line) and $8\pi/\sqrt{3}$ rad (dashed line), respectively. The light modulating device 100 operated with such a modulation amplitude reflects the incoming cw light beam except for the short periods of time, when the transmission approaches unity. Accordingly, six light pulses are generated per SAW period.

Possible applications include output mirrors for integrated lasers capable of generating short light pulses without mode-locking (integrated Q-switches). In the illustrated example ($N_s = 3$ and $\phi_{max} = 8\pi/\sqrt{3}$ rad), repetition rates of 10 GHz and 40 GHz can be realized using SAW frequencies of 1.67 GHz and 6.67 GHz, respectively.

Operation at high acoustic frequencies

The above assumption that the width of the waveguide arms 12 (and the optical wavelength $\lambda_L/n$) is much smaller than the acoustic wavelength $\lambda_{AW}$, is normally satisfied for modulation of near-infrared to visible light using acoustic waves with frequencies up to a few GHz. For operating with higher frequencies, acoustic wavelength $\lambda_{AW}$ could be shorter than the extension of the optical mode in the waveguide. For avoiding a reduction of the effect of the acoustic wave by averaging, structured wave guide arms 12 having a transversally inhomogeneous refractive index are preferably used. Figure 11 illustrates one approach based on structured waveguides. Here, the core of the waveguides forming the waveguides arms 12 is replaced by a superlattice with a period much smaller than the light wavelength. The superlattice is schematically shown in the enlarged partial view of Figure 11.

With a preferred variant, the superlattice consists of two materials (1 and 2) with refractive indices $n_1$ and $n_2$, respectively. As an example materials 1 and 2 comprise GaAs and AlAs, resp.. For the optical wave, the superlattice is equivalent to a homogeneous effective medium with an effective refractive index $n_{eff}$ that depends on the light wavelength $\lambda_L$, polarization, as well as on the optical properties and thicknesses of the two regions. For equal layer thicknesses and light polarization in the plane of the layers, the effective refractive index is approximately given by

$$n_{eff} = \sqrt{\left(n_1^2 + n_2^2\right)/2} \ .$$

With the assumption that the changes $\delta n_1$ in the refractive index of material 1 induced by the acoustic field is much larger than for layer 2 (i.e., $\delta n_1 \gg \delta n_2$, fulfilled, for instance, by operating close to an electronic transition of material 1) and with a superlattice period equal to $\lambda_A$, the modulation amplitude ($\delta n_{eff}$) of the effective refractive index induced by the acoustic field becomes $\delta n_{eff} = \dfrac{1}{2} \dfrac{n_1}{n_{eff}} \delta n_1$ . The smaller effective modulation amplitude as compared with a simple waveguide of material 1 can be compensated with provision of longer waveguides.

Application of bulk acoustic waves

While fabricating techniques for providing the superlattice in surface waveguides (Figure 11) are available, the structured waveguide arms with superlattices are preferably provided for acousto-optic modulation by bulk (instead of surface) acoustic waves. In this case, the waveguides can be simply fabricated by growing layers with different dielectric materials. An example of a serial optical switch using bulk acoustic sources is illustrated in Figure 12.

According to the example of Figure 12 not according to the invention, the light modulating device 100 comprises a waveguide device 10 with an input waveguide 11, waveguide arms 12 and an output waveguide 13. The waveguide arms 12 provide two serially connected a-MZI's 16. The phase modulating device 20 includes two acoustic source 22, 23 being integrated on a surface of a common body including the waveguide device 10. Each of the acoustic sources 22, 23 is adapted for creating a bulk wave directed to one of the MZI's 16. The waveguides 11, 12, 13 are fabricated by growing dielectric layers of different refractive indices. The application of the example of Figure 12 is not restricted on the provision of structured waveguide arms but rather possible for an implementation of the concepts described above with reference to Figures 1 to 10.

With structured waveguide arms, each horizontal waveguide section consists of a layer with high refractive index separated by cladding layers with lower refractive index, while the Y-splitters are made by interconnecting different layers. The acoustic sources deposited on the surface generate bulk acoustic waves that control the transmission of a light beam propagating through the superlattice waveguides. Alternatively, high frequency bulk waves can be produced using short laser pulses.

Since superlattices with well-defined layer thicknesses down to nm range can be produced by well-controlled growth techniques, this embodiment of the invention can be applied for the realization of acousto-optic switches and modulators with operation frequencies up to the THz range.

**Claims**

**1.** Light modulator device (100), comprising:

- an optical wave guide device (10) with an input wave guide (11) adapted to guide an input light, a plurality of N wave guide arms (12), N being an integer equal to or larger than 3, and an output wave guide (13), wherein the wave guide arms (12) are connected between the input and output wave guides (11, 13) so as to form an interferometric structure, and the output wave guide (13) is adapted for superimposing the portions of the imput light guided through the wave guide arms (12) to form output light, and
- a phase modulator device (20) being adapted for modulating the optical length of each of the wave guide arms (12) according to one of N modulation phase values, which are distributed in the interval of 0 to 2n, said phase modulator device (20) being thereby adapted to control at least one of the amplitude, the frequency and the pulse shape of the output light

**characterized in that**

- the phase modulator device (20) comprises one single common modulator (21) being adapted for generating one single modulation wave, wherein
- the wave guide arms (12) are arranged such that the optical lengths of the wave guide arms (12) are simultaneously modulated by the modulation wave, and
- the wave guide arms (12) are arranged with mutual distances such that the modulation phase values are provided by the phases of the modulation wave at the wave guide arms (12).

2. Light modulator device according to claim 1, wherein the phase modulator device (20) is adapted for acoustically, electrically, magnetically and/or optically modulating the optical lengths of the wave guide arms (12).

3. Light modulator device according to claim 1 or 2, wherein the common modulator comprises one acoustic source (21) and the modulation wave is an acoustic wave.

4. Light modulator device according to claim 3, wherein the wave guide arms (12) are connected in parallel between the input and output waveguides (11, 13) such that the distance of neighbouring wave guide arms (12) equals $\lambda_{AW}*n/N$, wherein $\lambda_{AW}$ is the wavelength of the acoustic wave and n is an integer coprime to N.

5. Light modulator device according to claim 3 or 4, wherein neighbouring wave guide arms (12) have a distance equal to odd multiples of $\lambda_{AW}/2$, wherein $\lambda_{AW}$ is the wavelength of the acoustic wave.

6. Light modulator device according to at least one of the foregoing claims, comprising at least two groups (16) of parallel connected wave guide arms (12), wherein the groups (16) of wave guide arms (12) are serially connected between the input and output wave guides (11, 13).

7. Light modulator device according to claim 6, wherein the wave guide arms (12) are arranged such that the distance of neighbouring wave guide arms (12) equals $\lambda_{AW} * (n+1) / (N_S N_P)$, wherein $\lambda_{AW}$ is the wavelength of the acoustic wave, n is an even number, $N_S$ is the number of serially connected groups (16) of wave guide arms (12) and $N_P$ is the number of parallel connected wave guide arms (12) within each group.

8. Light modulator device according to at least one of the foregoing claims, wherein the wave guide arms (12) form at least one Mach-Zehnder-interferometer.

9. Light modulator device according to at least one of the foregoing claims, wherein the wave guide arms (12) have a transversally inhomogeneous refractive index.

10. Light modulator device according to at least one of the foregoing claims, wherein

- in an off-state, in which the phase modulator device (20) is not operated, the wave guide arms (12) have optical lengths such that the portions of the input light guided through the wave guide arms (12) are superimposed constructively in the output wave guide (13), and
- in a modulation state, in which the phase modulator device (20) is operated, the optical lengths of the wave guide arms (12) are modulated with the modulation phase values.

11. Light modulator device according to at least of claims 1 to 9, wherein

- in an off-state, in which the phase modulator device (20) is not operated, the wave guide arms (12) have different optical lengths such that the phases of the portions of the input light guided through the wave guide arms (12) and superimposed in the output wave guide (13) are distributed in the interval from 0 to $2\pi$, and
- in a modulation state, in which the phase modulator device (20) is operated, the wave guide arms (12) have optical lengths such that the portions of the input light guided through the wave guide arms (12) are superimposed constructively in the output wave guide (13).

12. Light modulator device according to at least one of the foregoing claims, further comprising a modulation setting device (24) being arranged for adjusting a modulation amplitude $\phi_{max}$ and/or a modulation frequency of the optical length modulation.

13. Light modulator device according to at least one of the claims 3 to 12, wherein the acoustic source (21, 22, 23) is adapted for generating surface acoustic waves (SAW) or bulk acoustic waves (BAW).

**14.** Light modulator device according to at least one of the foregoing claims, wherein

- the wave guide device (10) is an integrated solid state device, and
- the wave guide arms (12) are connected with the input wave guide (11) and/or with the output wave guide (13) via an Y- or T-branching (14) or a multimode interference coupler (15).

**15.** Method of modulating light, comprising the steps of:

- coupling the light into an input wave guide (11) of an optical wave guide device (10) the wave wave guide device (10) further including an output wave guide (13) and a plurality of N wave guide arms (12), N being an integer equal to or larger than 3, the wave guide arus (12) being connected between the input and output wave guides (11, 13) so as to form an interferometric structure,
- guiding respective portions of the input light through respective wave guide arms (12) from the input wave guide (11) to the output wave guide (13),
- modulating the optical length of each of the wave guide arms (12) according to one of N modulation phase values distributed in the interval from 0 to $2\pi$, and
- superimposing the light portions guided through the wave guide arms (12) in the output wave guide (13), to form output light

wherein said modulating step is adapted to control at least one of the amplitude, the frequency and the pulse shape of the output light,
**characterized in that** the modulating step comprises

- generating one single modulation wave with one common modulator (21), and
- simultaneously modulating the optical lengths of the wave guide arms (12) with the modulation wave, wherein
- the wave guide arms (12) are arranged with mutual distances such that the modulation phase values are provided by the , phases of the modulation wave at the wave guide arms (12).

**16.** Method according to claim 15, wherein the optical lengths of the wave guide arms (12) are modulated acoustically, electrically, magnetically and/or optically.

**17.** Method according to claim 15 or 16, wherein the common modulator comprises one acoustic source (21) and the modulation wave is an acoustic wave.

**18.** Method according to at least one of the claims 15 to 17, wherein the modulating step includes a step of switching between an off-state and a modulation state, wherein

- in the off-state, in which the optical lengths of the wave guide arms (12) are not modulated, the wave guide arms (12) have optical lengths such that the light portions guided through the waveguide arus (12) are superimposed constructively in the output wave guide (13), and
- in the modulation state, in which the optical lengths of the wave guide arms (12) are modulated, the optical lengths of the wave guide arms (12) are modulated with the modulation phase values.

**19.** Method according to at least one of the claims 15 to 17, wherein the modulating step includes a step of switching between an off-state and a modulation state, wherein

- in the off-state, in which the optical lengths of the wave guide arms (12) are not modulated, the wave guide arms (12) have different optical lengths such that the phases of the light portions guided through the waveguide arus (12) and superimposed in the output wave guide (13) are distributed in the interval from 0 to $2\pi$, and
- in the modulation state, in which the optical lengths of the wave guide arms (12) are modulated, the wave guide arms (12) have optical lengths such that the light portions guided through the wave guide arms (12) are superimposed constructively in the output wave guide (13).

**20.** Method according to at least one of the claims 15 to 18, comprising the step of setting a modulation amplitude $\phi_{max}$ and/or a modulation frequency of the optical length modulation such, that a predetermined light amplitude, a predetermined composition of harmonic frequencies of a modulation frequency, or the pulse shape of the output light is adjusted.

**Patentansprüche**

1.  Lichtmodulatoreinrichtung (100), umfassend:

    - eine optische Wellenleitereinrichtung (10) mit einem Eingangswellenleiter (11), der angepasst ist, ein Eingangslicht zu leiten, einer Vielzahl von N Wellenleiterarmen (12), wobei N eine ganze Zahl gleich oder größer als 3 ist, und einem Ausgangswellenleiter (13), wobei die Wellenleiterarme (12) zwischen den Eingangs- und Ausgangswellenleitern (11, 13) angeschlossen sind, um eine interferometrische Struktur zu bilden, und der Ausgangswellenleiter (13) zur Überlagerung der Anteile des Eingangslichts angepasst ist, die durch die Wellenleiterarme (12) geleitet werden, um Ausgangslicht zu bilden, und
    - eine Phasenmodulatoreinrichtung (20), die zur Modulation der optischen Länge von jedem der Wellenleiterarme (12) gemäß einem von N Modulationsphasenwerten angepasst ist, die in dem Intervall von 0 bis $2\pi$ verteilt sind, wobei die Phasenmodulatoreinrichtung (20) dabei angepasst ist, mindestens eines der Amplitude, der Frequenz und der Pulsform des Ausgangslichts zu steuern,

    **dadurch gekennzeichnet, dass**

    - die Phasenmodulatoreinrichtung (20) einen einzelnen gemeinsamen Modulator (21) umfasst, der zur Erzeugung einer einzelnen Modulationswelle angepasst ist, wobei
    - die Wellenleiterarme (12) derart angeordnet sind, dass die optischen Längen der Wellenleiterarme (12) durch die Modulationswelle gleichzeitig moduliert werden, und
    - die Wellenleiterarme (12) mit gegenseitigen Abständen derart angeordnet sind, dass die Modulationsphasenwerte durch die Phasen der Modulationswelle an den Wellenleiterarmen (12) bereitgestellt werden.

2.  Lichtmodulatoreinrichtung gemäß Anspruch 1, wobei die Phasenmodulatoreinrichtung (20) zur akustischen, elektrischen, magnetischen und/oder optischen Modulation der optischen Längen der Wellenleiterarme (12) eingerichtet ist.

3.  Lichtmodulatoreinrichtung gemäß Anspruch 1 oder 2, wobei der gemeinsame Modulator eine akustische Quelle (21) umfasst und die Modulationswelle eine akustische Welle ist.

4.  Lichtmodulatoreinrichtung gemäß Anspruch 3, wobei die Wellenleiterarme (12) zwischen den Eingangs- und Ausgangswellenleitern (11, 13) derart parallel angeschlossen sind, dass der Abstand von benachbarten Wellenleiterarmen (12) gleich $\lambda_W * n/N$ ist, wobei $\lambda_{AW}$ die Wellenlänge der akustischen Welle und n eine geradzahlige, zu N teilerfremde Zahl ist.

5.  Lichtmodulatoreinrichtung gemäß Anspruch 3 oder 4, wobei benachbare Mellenleiterarme (12) einen Abstand aufweisen, der gleich ungraden Vielfachen von $\lambda_{AW}/2$ ist, wobei $\lambda_{AW}$ die Wellenlänge der akustischen Welle ist.

6.  Lichtmodulatoreinrichtung gemäß mindestens einem der vorhergehenden Ansprüche, umfassend mindestens zwei Gruppen (16) von parallel angeschlossenen Wellenleiterarmen (12), wobei die Gruppen (16) der Wellenleiterarme (12) zwischen den Eingangs- und Ausgangswellenleitern (11, 13) in Serie angeschlossen sind.

7.  Lichtmodulatoreinrichtung gemäß Anspruch 6, wobei die Wellenleiterarme (12) derart angeordnet sind, dass der Abstand benachbarter Wellenleiterarme (12) gleich $\lambda_{AW} * (n+1) / (N_S N_P)$ ist, wobei $\lambda_{AW}$ die Wellenlänge der akustischen Welle, n eine gerade Zahl, $N_S$ die Anzahl der in Serie verbundenen Gruppen (16) der Wellenleiterarme (12) und $N_P$ die Anzahl von parallel angeschlossenen Wellenleiterarmen (12) innerhalb dieser Gruppe ist.

8.  Lichtmodulatoreinrichtung gemäß mindestens einem der vorhergehenden Ansprüche, wobei die Wellenleiterarme (12) mindestens ein Mach-Zehnder-Interferometer bilden.

9.  Lichtmodulatoreinrichtung gemäß mindestens einem der vorhergehenden Ansprüche, wobei die Wellenleiterarme (12) einen transversal inhomogenen Brechungsindex aufweisen.

10. Lichtmodulatoreinrichtung gemäß mindestens einem der vorhergehenden Ansprüche, wobei

    - in einem Aus-Zustand, in dem die Phasenmodulatoreinrichtung (20) nicht betrieben wird, die Wellenleiterarme (12) optische Längen derart aufweisen, dass die Anteile des Eingangslichts, die durch die Wellenleiterarme (12) geleitet werden, konstruktiv in dem Ausgangswellenleiter (13) überlagert werden, und
- in einem Modulationszustand, in dem die Phasenmodulatoreinrichtung (20) betrieben wird, die optischen Längen der Wellenleiterarme (12) mit den Modulationsphasenwerten moduliert werden.

**11.** Lichtmodulatoreinrichtung gemäß mindestens einem der Ansprüche 1 bis 9, wobei

- in einem Aus-Zustand, in dem die Phasenmodulatoreinrichtung (20) nicht betrieben wird, die Wellenleiterarme (12) verschiedene optische Längen derart aufweisen, dass die Phasen der Anteile des Eingangslichts, die durch die Wellenleiterarme (12) geleitet und in dem Ausgangswellenleiter (13) überlagert werden, in dem Intervall von 0 bis 2n verteilt sind, und
- in einem Modulationszustand, in dem die Phasenmodulatoreinrichtung (20) betrieben wird, die Wellenleiterarme (12) optische Längen derart aufweisen, dass die Anteile des Eingangslichts, die durch die Wellenleiterarme (12) geleitet werden, in dem Ausgangswellenleiter (13) konstruktiv überlagert werden.

**12.** Lichtmodulatoreinrichtung gemäß mindestens einem der vorhergehenden Ansprüche, die ferner eine Modulationsstelleinrichtung (24) umfasst, die zur Einstellung einer Modulationsamplitude $\phi_{max}$ und/oder einer Modulationsfrequenz der optischen Längenmodulation angeordnet ist.

**13.** Lichtmodulatoreinrichtung gemäß mindestens einem der Ansprüche 3 bis 12, wobei die akustische Quelle (21, 22, 23) für eine Erzeugung von akustischen Oberflächenwellen (SAW) oder akustischen Volumenwellen (BAW) eingerichtet ist.

**14.** Lichtmodulatoreinrichtung gemäß mindestens einem der vorhergehenden Ansprüche, wobei

- die Wellenleitereinrichtung (10) eine integrierte Festkörpereinrichtung ist, und
- die Wellenleiterarme (12) mit dem Eingangswellenleiter (11) und/oder mit dem Ausgangswellenleiter (13) über eine Y- oder T-Verzweigung (14) oder einen Multimoden-Interferenz-Koppler (15) verbunden sind.

**15.** Verfahren zur Modulation von Licht, umfassend die Schritte:

- Einkopplung des Lichts in einen Eingangswellenleiter (11) einer optischen Wellenleitereinrichtung (10), wobei die Wellenleitereinrichtung (10) ferner einen Ausgangswellenleiter (13) und eine Vielzahl von N Wellenleiterarmen (12) umfasst, wobei N eine ganze Zahl gleich oder größer als 3 ist, wobei die Wellenleiterarme (12) zwischen den Eingangs- und Ausgangswellenleitern (11, 13) angeschlossen sind, um eine interferometrische Struktur zu bilden,
- Leiten entsprechender Anteile des Eingangslichts von dem Eingangswellenleiter (11) durch entsprechende Wellenleiterarme (12) zu dem Ausgangswellenleiter (13),
- Modulation der optischen Länge von jedem der Wellenleiterarme (12) gemäß einem von N Modulationsphasenwerten, die in dem Intervall von 0 bis 2n verteilt sind, und
- Überlagerung der Lichtanteile, die durch die Wellenleiterarme (12) geführt werden, in dem Ausgangswellenleiter (13), um Ausgangslicht zu bilden, wobei
- der Modulationsschritt angepasst ist, um mindestens eines der Amplitude, der Frequenz und der Pulsform des Ausgangslichts zu steuern,

**dadurch gekennzeichnet, dass** der Modulationsschritt umfasst

- eine Erzeugung einer einzelnen Modulationswelle mit einem gemeinsamen Modulator (21), und
- eine gleichzeitige Modulation der optischen Längen der Wellenleiterarme (12) mit der Modulationswelle, wobei
- die Wellenleiterarme (12) mit gegenseitigen Abständen derart angeordnet sind, dass die Modulationsphasenwerte durch die Phasen der Modulationswelle an den Wellenleiterarmen (12) bereitgestellt werden.

**16.** Verfahren gemäß Anspruch 15, wobei die optischen Längen der Wellenleiterarme (12) akustisch, elektrisch, magnetisch und/oder optisch moduliert werden.

**17.** Verfahren gemäß Anspruch 15 oder 16, wobei der gemeinsame Modulator eine akustische Quelle (21) umfasst und die Modulationswelle eine akustische Quelle ist.

**18.** Verfahren gemäß mindestens einem der Ansprüche 15 bis 17, wobei der Modulationsschritt einen Schritt eines Schaltens zwischen einem Aus-Zustand und einem Modulations-Zustand enthält, wobei

- in dem Aus-Zustand, in dem die optischen Längen der Wellenleiterarme (12) nicht moduliert sind, die Wellenleiterarme (12) optische Längen derart aufweisen, dass die Lichtanteile, die durch die Wellenleiterarme (12) geleitet werden, im Ausgangswellenleiter (13) konstruktiv überlagert werden, und
- in dem Modulationszustand, in dem die optischen Längen der Wellenleiterarme (12) moduliert werden, die optischen Längen der Wellenleiterarme (12) mit den Modulationsphasenwerten moduliert werden.

19. Verfahren gemäß mindestens einem der Ansprüche 15 bis 17, wobei der Modulationsschritt einen Schritt eines Schaltens zwischen einem Aus-Zustand und einem Modulations-Zustand enthält, wobei

- in dem Aus-Zustand, in dem die optischen Längen der Wellenleiterarme (12) nicht moduliert werden, die Wellenleiterarme (12) verschiedene optische Wellen derart aufweisen, dass die Phasen der Lichtanteile, die durch die Wellenleiterarme (12) geführt werden, in dem Ausgangswellenleiter (13) in dem Intervall von 0 bis 2n verteilt werden, und
- in dem Modulations-Zustand, in dem die optischen Längen der Wellenleiterarme (12) moduliert werden, die Wellenleiterarme (12) optische Längen derart aufweisen, dass die Lichtanteile, die durch die Wellenleiterarme (12) geleitet werden, in dem Ausgangswellenleiter (13) konstruktiv überlagert werden.

20. Verfahren gemäß mindestens einem der Ansprüche 15 bis 18, umfassend den Schritt einer Einstellung einer Modulationsamplitude $\phi_{max}$ und/oder einer Modulationsfrequenz der Modulation der optischen Länge derart umfasst, dass eine vorbestimmte Lichtamplitude, eine vorbestimmte Zusammensetzung von harmonischen Frequenzen einer Modulationsfrequenz oder die Pulsform des Ausgangslichts eingestellt wird.

**Revendications**

1. Dispositif de modulation de lumière (100), comprenant :

- un dispositif de guidage d'onde optique (10) comportant un guide d'onde d'entrée (11) adapté pour guider une lumière d'entrée, une pluralité de N bras de guide d'onde (12), N étant un entier égal ou supérieur à 3, et un guide d'onde de sortie (13), dans lequel les bras de guide d'onde (12) sont connectés entre les guides d'onde d'entrée et de sortie (11, 13) de manière à former une structure interférométrique, et le guide d'onde de sortie (13) est adapté pour superposer les parties de la lumière d'entrée guidées à travers les bras de guide d'onde (12) pour former une lumière de sortie, et
- un dispositif de modulation de phase (20) qui est adapté pour moduler la longueur optique de chacun des bras de guide d'onde (12) conformément à l'une de N valeurs de phase de modulation, qui sont réparties dans l'intervalle de 0 à $2\pi$, ledit dispositif de modulation de phase (20) étant de ce fait adapté pour commander au moins l'une de l'amplitude, de la fréquence et de la forme d'impulsion de la lumière de sortie,

**caractérisé en ce que**

- le dispositif de modulation de phase (20) comprend un modulateur (21) commun unique qui est adapté pour générer une onde de modulation unique, dans lequel
- les bras de guide d'onde (12) sont agencés de sorte que les longueurs optiques des bras de guide d'onde (12) soient modulées simultanément par l'onde de modulation, et
- les bras de guide d'onde (12) sont agencés avec des distances mutuelles de sorte que les valeurs de phase de modulation soient fournies par les phases de l'onde de modulation au niveau des bras de guide d'onde (12).

2. Dispositif de modulation de lumière selon la revendication 1, dans lequel le dispositif de modulation de phase (20) est adapté pour moduler acoustiquement, électriquement, magnétiquement et/ou optiquement les longueurs optiques des bras de guide d'onde (12).

3. Dispositif de modulation de lumière selon la revendication 1 ou 2, dans lequel le modulateur commun comprend une source acoustique (21) et l'onde de modulation est une onde acoustique.

4. Dispositif de modulation de lumière selon la revendication 3, dans lequel les bras de guide d'onde (12) sont connectés en parallèle entre les guides d'onde d'entrée et de sortie (11, 13) de sorte que la distance des bras de guide d'onde (12) voisins soit égale à $\lambda_{AW}$ * n/N, où $\lambda_{AW}$ est la longueur d'onde de l'onde acoustique et n est un entier co-premier par rapport à N.

5. Dispositif de modulation de lumière selon la revendication 3 ou 4, dans lequel les bras de guide d'onde (12) voisins ont une distance égale à des multiples impairs de $\lambda_{AW}$/2, où $\lambda_{AW}$ est la longueur d'onde de l'onde acoustique.

6. Dispositif de modulation de lumière selon au moins l'une des revendications précédentes, comprenant au moins deux groupes (16) de bras de guide d'onde (12) connectés en parallèle, dans lequel les groupes (16) de bras de guide d'onde (12) sont connectés en série entre les guides d'onde d'entrée et de sortie (11, 13).

7. Dispositif de modulation de lumière selon la revendication 6, dans lequel les bras de guide d'onde (12) sont agencés de sorte que la distance des bras de guide d'onde (12) voisins soit égale à $\lambda_{AW}$ * (n+1) / (N_S N_P), où $\lambda_{AW}$ est la longueur d'onde de l'onde acoustique, n est un nombre pair, $N_S$ est le nombre de groupes (16) connectés en série de bras de guide d'onde (12) et $N_P$ est le nombre de bras de guide d'onde (12) connectés en parallèle dans chaque groupe.

8. Dispositif de modulation de lumière selon au moins l'une des revendications précédentes, dans lequel les bras de guide d'onde (12) forment au moins un interféromètre Mach-Zehnder.

9. Dispositif de modulation de lumière selon au moins l'une des revendications précédentes, dans lequel les bras de guide d'onde (12) ont un indice de réfraction non homogène transversalement.

10. Dispositif de modulation de lumière selon au moins l'une des revendications précédentes, dans lequel

   - dans un état inactif, dans lequel le dispositif de modulation de phase (20) n'est pas mis en oeuvre, les bras de guide d'onde (12) ont des longueurs optiques telles que les parties de la lumière d'entrée guidées à travers les bras de guide d'onde (12) sont superposées de manière constructive dans le guide d'onde de sortie (13), et
   - dans un état de modulation, dans lequel le dispositif de modulation de phase (20) est mis en oeuvre, les longueurs optiques des bras de guide d'onde (12) sont modulées avec les valeurs de phase de modulation.

11. Dispositif de modulation de lumière selon au moins l'une des revendications 1 à 9, dans lequel

   - dans un état inactif, dans lequel le dispositif de modulation de phase (20) n'est pas mis en oeuvre, les bras de guide d'onde (12) ont différentes longueurs optiques de sorte que les phases des parties de la lumière d'entrée guidées à travers les bras de guide d'onde (12) et superposées dans le guide d'onde de sortie (13) sont réparties dans l'intervalle de 0 à $2\pi$, et
   - dans un état de modulation, dans lequel le dispositif de modulation de phase (20) est mis en oeuvre, les bras de guide d'onde (12) ont des longueurs optiques telles que les parties de la lumière d'entrée guidées à travers les bras de guide d'onde (12) sont superposées de manière constructive dans le guide d'onde de sortie (13).

12. Dispositif de modulation de lumière selon au moins l'une des revendications précédentes, comprenant en outre un dispositif de réglage de modulation (24) qui est agencé pour ajuster une amplitude de modulation $\phi_{max}$ et/ou une fréquence de modulation de la modulation de longueur optique.

13. Dispositif de modulation de lumière selon au moins l'une des revendications 3 à 12, dans lequel la source acoustique (21, 22, 23) est adaptée pour générer des ondes acoustiques de surface (SAW) ou des ondes acoustiques de volume (BAW).

14. Dispositif de modulation de lumière selon au moins l'une des revendications précédentes, dans lequel

   - le dispositif de guidage d'onde (10) est un dispositif à semi-conducteurs intégré, et
   - les bras de guide d'onde (12) sont connectés au guide d'onde d'entrée (11) et/ou au guide d'onde de sortie (13) par l'intermédiaire d'un branchement en Y ou en T (14) ou d'un coupleur à interférence multimode (15).

15. Procédé de modulation de lumière, comprenant les étapes consistant à :

   - coupler la lumière dans un guide d'onde d'entrée (11) d'un dispositif de guidage d'onde optique (10), le dispositif de guidage d'onde (10) comprenant en outre un guide d'onde de sortie (13) et une pluralité de N bras de guide d'onde (12), N étant un entier égal ou supérieur à 3, les bras de guide d'onde (12) étant connectés entre les guides d'onde d'entrée et de sortie (11, 13) de manière à former une structure interférométrique,
- guider des parties respectives de la lumière d'entrée à travers des bras de guide d'onde (12) respectifs, du guide d'onde d'entrée (11) vers le guide d'onde de sortie (13),
- moduler la longueur optique de chacun des bras de guide d'onde (12) conformément à l'une de N valeurs de phase de modulation réparties dans l'intervalle de 0 à $2\pi$, et
- superposer les parties de lumière guidées à travers les bras de guide d'onde (12) dans le guide d'onde de sortie (13) pour former une lumière de sortie,

dans lequel ladite étape de modulation est adaptée pour commander au moins l'une de l'amplitude, de la fréquence et de la forme d'impulsion de la lumière de sortie,
**caractérisé en ce que** l'étape de modulation consiste à :

- générer une onde de modulation unique par un modulateur commun (21), et
- moduler simultanément les longueurs optiques des bras de guide d'onde (12) avec l'onde de modulation, dans lequel
- les bras de guide d'onde (12) sont agencés avec des distances mutuelles de sorte que les valeurs de phase de modulation soient fournies par les phases de l'onde de modulation au niveau des bras de guide d'onde (12).

16. Procédé selon la revendication 15, dans lequel les longueurs optiques des bras de guide d'onde (12) sont modulées acoustiquement, électriquement, magnétiquement et/ou optiquement.

17. Procédé selon la revendication 15 ou 16, dans lequel le modulateur commun comprend une source acoustique (21) et l'onde de modulation est une onde acoustique.

18. Procédé selon au moins l'une des revendications 15 à 17, dans lequel l'étape de modulation comprend une étape de commutation entre un état inactif et un état de modulation, dans lequel

- dans l'état inactif, dans lequel les longueurs optiques des bras de guide d'onde (12) ne sont pas modulées, les bras de guide d'onde (12) ont des longueurs optiques telles que les parties de lumière guidées à travers les bras de guide d'onde (12) sont superposées de manière constructive dans le guide d'onde de sortie (13), et
- dans l'état de modulation, dans lequel les longueurs optiques des bras de guide d'onde (12) sont modulées, les longueurs optiques des bras de guide d'onde (12) sont modulées avec les valeurs de phase de modulation.

19. Procédé selon au moins l'une des revendications 15 à 17, dans lequel l'étape de modulation comprend une étape de commutation entre un état inactif et un état de modulation, dans lequel

- dans l'état inactif, dans lequel les longueurs optiques des bras de guide d'onde (12) ne sont pas modulées, les bras de guide d'onde (12) ont différentes longueurs optiques de sorte que les phases des parties de lumière guidées à travers les bras de guide d'onde (12) de manière à former une structure interférométrique et superposées dans le guide d'onde de sortie (13) sont réparties dans l'intervalle de 0 à $2\pi$, et
- dans l'état de modulation, dans lequel les longueurs optiques des bras de guide d'onde (12) sont modulées, les bras de guide d'onde (12) ont des longueurs optiques telles que les parties de lumière guidées à travers les bras de guide d'onde (12) sont superposées de manière constructive dans le guide d'onde de sortie (13).

20. Procédé selon au moins l'une des revendications 15 à 18, comprenant l'étape de réglage d'une amplitude de modulation $\phi_{max}$ et/ou d'une fréquence de modulation de la modulation de longueur optique de sorte qu'une amplitude de lumière prédéterminée, une composition prédéterminée de fréquences harmoniques d'une fréquence de modulation, ou la forme d'impulsion de la lumière de sortie soit ajustée.

FIG. 1

FIG. 2

FIG. 3

FIG. 4

FIG. 5

10 log$_{10}$ [Transmission] (dB)

FIG. 6

FIG. 7

Transmission

$$N_P = 3$$
$$\phi_{max} = 4\pi/3$$

$$\omega_{SAW}\ t/\ \pi$$

FIG. 8

FIG. 9

FIG. 10

$\lambda_L$

$n_1$
$n_2$

$\lambda_A/2$

12

FIG. 11

100

22

20

23

11

13

12

10

16

12

FIG. 12

21'

12'

13'

10'

11'

FIG. 13
(Prior Art)

100'

11'

21'

10'

12'

13'

FIG. 14
(Prior Art)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5915050 A
- JP 2006242975 A
- JP 2006276323 A
- US 2003030882 A1
- US 2005213863 A1

**Non-patent literature cited in the description**

- **C. GORECKI et al.** *Proc. of SPIE,* 1997, vol. 3098, 392
- **C. GORECKI et al.** *Opt. Lett.,* 1997, vol. 22, 1784
- **M. M. DE LIMA, JR. ; M. BECK ; R. HEY ; P. V. SANTOS.** *Appl. Phys. Lett.,* 2006, vol. 89, 121104
- **M. M. DE LIMA, JR. ; F. ALSINA ; W. SEIDEL ; P. V. SANTOS.** *J. Appl. Phys.,* 2003, vol. 94, 7848
- **F.C. Jain et al.** *IEEE. Proceedings of the ultrasonics symposium. Lake Buena Vista,* 08 December 1991, vol. 1, 529-536
- **C. S. TSAI et al.** *Appl. Phys. Lett.,* 1985, vol. 47, 685